# EUROPEAN PATENT APPLICATION

(11) **EP 4 472 274 A1**
(43) Date of publication of application: **04.12.2024**
(21) Application number: 22922668.3
(22) Date of filing: 26.01.2022
(51) Int. Cl.: H04W 24/10, H04W 72/04

(54) **COMMUNICATION METHOD AND APPARATUS, AND DEVICE AND STORAGE MEDIUM**

(71) Applicant: Beijing Xiaomi Mobile Software Co., Ltd., Beijing 100085 (CN)
(72) Inventor: DONG, Xiandong, Beijing 100085 (CN)
(74) Representative: Dehns Germany Partnerschaft mbB
(86) International application number: PCT/CN2022/074045
(87) International publication number: WO 2023/141818

(57) **Abstract**

The embodiments of the present disclosure relate to the technical field of mobile communications. Provided are a communication method and apparatus, and a device and a storage medium, which can be applied to a wireless local area network sensing initiation device. The method comprises: receiving a first message frame, which is sent by a wireless local area network sensing proxy device, wherein the first message frame comprises a sensing measurement result, and the first message frame further comprises at least one of a wireless local area network sensing measurement establishment identifier or a proxy measurement identifier corresponding to the sensing measurement result. By means of the embodiments of the present disclosure, when performing wireless local area network sensing measurement by means of a wireless local area network sensing proxy device, a wireless local area network sensing initiation device can acquire a sensing measurement result, which is returned by the wireless local area network sensing proxy device.

## Description

### TECHNICAL FIELD

Embodiments of the present disclosure relate to the technical field of mobile communication, and in particular, the embodiments of the present disclosure relate to a communication method, apparatus, device, and storage medium.

### BACKGROUND

Wireless Local Area Network (WLAN) has the characteristics of flexibility, mobility, low cost, and the like. With the development of communication technology and the increase of user demand, the application research on WLAN is being gradually deepened.

Currently, in the procedure of WLAN sensing measurement, in order to ensure the measurement accuracy and efficient use of spectrum, the WLAN sensing initiator can implement WLAN sensing measurement through the WLAN sensing proxy. However, how the WLAN sensing proxy returns the measurement results is inconclusive.

### SUMMARY

Embodiments of the present disclosure provide a communication method, apparatus, device, and storage medium, which enable the WLAN sensing proxy to return a sensing measurement result to the WLAN sensing initiator.

In the first aspect, an embodiment of the present disclosure provides a communication method, which can be applied to a Wireless Local Area Network (WLAN) sensing initiator, and the method includes:

receiving a first message frame sent by a WLAN sensing proxy, where the first message frame includes a sensing measurement result, and the first message frame further includes at least one of a WLAN sensing measurement setup identification and a proxy measurement identification corresponding to the sensing measurement result.

In the second aspect, an embodiment of the present disclosure provides a communication method, which can be applied to a WLAN sensing proxy, and the method includes:

sending a first message frame to a WLAN sensing initiator, where the first message frame includes a sensing measurement result, and the first message frame further includes at least one of a WLAN sensing measurement setup identification and a proxy measurement identification corresponding to the sensing measurement result.

In the third aspect, an embodiment of the present disclosure further provides a communication apparatus, which includes:
a first receiving unit, configured to receive a first message frame sent by a WLAN sensing proxy, where the first message frame includes a sensing measurement result, and the first message frame further includes at least one of a WLAN sensing measurement setup identification and a proxy measurement identification.

In the fourth aspect, an embodiment of the present disclosure further provides a communication apparatus, which includes:
a second sending unit, configured to send a first message frame to a WLAN sensing initiator, where the first message frame includes a sensing measurement result, and the first message frame further includes at least one of a WLAN sensing measurement setup identification and a proxy measurement identification.

In the fifth aspect, an embodiment of the present disclosure also provides a WLAN sensing initiator, including a memory, a processor, and a computer program stored in the memory and operable on the processor, and when executing the program, the processor implements the communication method provided in the first aspect of the embodiments of the present disclosure.

In the sixth aspect, an embodiment of the present disclosure also provides a WLAN sensing proxy, including a memory, a processor, and a computer program stored on the memory and operable on the processor, and when executing the program, the processor implements the communication method provided in the second aspect of the embodiments of the present disclosure.

In the seventh aspect, an embodiment of the present disclosure also provides a computer-readable storage medium, on which a computer program is stored, and when the computer program is executed by a processor, any one of the communication methods provided in the embodiments of the present disclosure can be implemented.

In the embodiments of the present disclosure, the WLAN sensing initiator can instruct the WLAN sensing proxy to return the sensing measurement result to the WLAN sensing initiator by sending the first message frame to the WLAN sensing proxy. The WLAN sensing proxy can send the second message frame to the WLAN sensing initiator to request the WLAN sensing initiator to return the sensing measurement result.

Additional aspects and advantages of the embodiments of the present disclosure will be set forth in part in the description which follows, and will become apparent from the description, or may be learned by practice of the present disclosure.

### BRIEF DESCRIPTION OF THE DRAWINGS

In order to more clearly illustrate the technical solutions of the embodiments of the present disclosure, the following will briefly introduce the accompanying drawings that need to be used in the description of the embodiments of the present disclosure. Obviously, the accompanying drawings in the following description are only some embodiments of the present disclosure, for those skilled in the art, other drawings can also be obtained according to these drawings without paying creative labor.
FIG. 1 is a flowchart of a communication method provided by an embodiment of the present disclosure;
FIG. 2 is another flowchart of a communication method provided by an embodiment of the present disclosure;
FIG. 3 is a schematic structural diagram of a communication apparatus provided by an embodiment of the present disclosure;
FIG. 4 is another schematic structural diagram of a communication apparatus provided by an embodiment of the present disclosure;
FIG. 5 is a schematic structural diagram of a wireless local area network initiator provided by an embodiment of the present disclosure;
FIG. 6 is a schematic structural diagram of a wireless local area network proxy provided by an embodiment of the present disclosure.

### DETAILED DESCRIPTION

The term "and/or" in the embodiments of the present disclosure describes the association relationship of associated objects, indicating that there may be three relationships, for example, A and/or B may mean: A exists alone, A and B exist simultaneously, and B exists alone. The character "/" generally indicates that the contextual objects have an "or" relationship.

The term "a plurality of' in the embodiments of the present disclosure refers to two or more, and other quantifiers are similar thereto.

Reference will now be made in detail to the exemplary embodiments, examples of which are illustrated in the accompanying drawings. When the following description refers to the drawings, unless otherwise indicated, the same numerals in different drawings indicate the same or similar elements. The implementations described in the following exemplary embodiments do not represent all implementations consistent with the present disclosure. Rather, they are merely examples of apparatuses and methods consistent with some aspects of the present disclosure as recited in the appended claims.

The terms used in the present disclosure are for the purpose of describing particular embodiments only, and are not intended to limit the present disclosure. As used in the present disclosure and the appended claims, the singular forms "a", "said" and "the" are also intended to include the plural unless the context clearly dictates otherwise. It should also be understood that the term "and/or" as used herein refers to and includes any and all possible combinations of one or more of the associated listed items.

It should be understood that although the terms first, second, third, etc. may be used in the present disclosure to describe various information, the information should not be limited to these terms. These terms are only used to distinguish information of the same type from one another. For example, without departing from the scope of the present disclosure, first information may also be called second information, and similarly, second information may also be called first information. Depending on the context, for example, the word "if" as used herein could be interpreted as "at" or "when" or "in response to a determination."

The following will clearly and completely describe the technical solutions in the embodiments of the present disclosure with reference to the accompanying drawings in the embodiments of the present disclosure. Obviously, the described embodiments are only some of the embodiments of the present disclosure, not all of them. Based on the embodiments in the present disclosure, all other embodiments obtained by persons of ordinary skill in the art without making creative efforts belong to the protection scope of the present disclosure.

For convenience of description, in the embodiments of the present disclosure, the Wireless Local Area Network (WLAN) sensing initiator is referred to as an initiator for short, and the WLAN sensing proxy is referred to as a proxy for short.

In the embodiments of the present disclosure, the procedure of WLAN sensing measurement may be as follows: the initiator may initiate the WLAN sensing measurement through a proxy, for example, when a Non-Access Point (non-AP) Station (STA) is used as the initiator, an AP that is associated or not associated with the initiator and supports Sensing by Proxy (SBP) can act as the proxy and initiate the WLAN sensing measurement based on a triggered-based (TB) method.

Specifically, the initiator sends a sensing by proxy request (SBP request) message frame to the proxy to request the proxy to perform WLAN sensing measurement, and after receiving the SBP request message frame, the proxy sends a sensing by proxy response (SBP response) message frame to the initiator to accept or reject the request from the initiator.

If the proxy accepts the request of the initiator, it can initiate the WLAN sensing measurement with one or more non-AP stations (i.e., WLAN sensing responders) from the relevant operating parameters indicated by the SBP request message frame.

The initiator may also serve as a WLAN sensing responder, or may not serve as the WLAN sensing responder, which is not limited here.

Further, the sensing measurement result obtained by the proxy during the wireless local area network sensing measurement procedure based on the SBP request message frame sent by the initiator should be reported to the initiator.

The initiator and the proxy may include, but are not limited to: cellular phones, smart phones, wearable devices, computers, personal digital assistants (PDAs), personal communication system (PCS) devices, personal information managers (PIMs), personal navigation devices (PND), Global Positioning System (GPS), multimedia devices, Internet of Things (IoT) devices, etc.

Embodiments of the present disclosure provide a communication method, apparatus, device, and storage medium, which are used to enable a proxy to return a sensing measurement result to an initiator.

The method and the apparatus are based on the same disclosed concept, and since the principles of the method and the apparatus to solve the problem are similar, the implementations of the apparatus and the method may be referred to each other, and the repetition will not be elaborated.

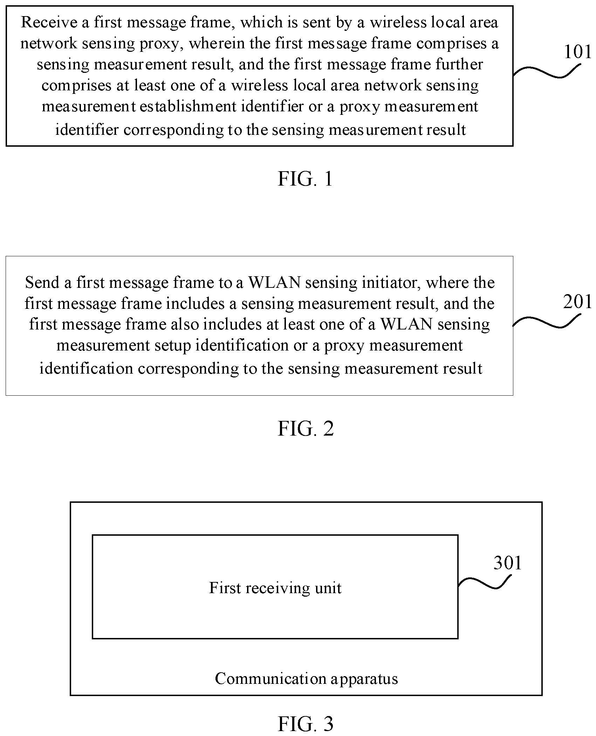

As shown in FIG. 1, an embodiment of the present disclosure provides a communication method. Optionally, the method may be applied to a Wireless Local Area Network (WLAN) sensing initiator. The communication method shown in FIG. 1 may specifically include the following steps.

In step 101, a first message frame sent by a WLAN sensing proxy is received, where the first message frame includes a sensing measurement result, and the first message frame also includes at least one of a WLAN sensing measurement setup identification (ID) and a proxy measurement identification (SBP ID) corresponding to the sensing measurement result.

The WLAN sensing measurement setup ID or the proxy measurement ID is assigned by the proxy to the initiator during the sensing proxy setup procedure, for example, the AP carries the measurement setup ID or SBP ID in the SBP response frame sent to the requesting STA during the sensing proxy setup procedure.

Specifically, the initiator may obtain the sensing measurement result included in the first message frame by receiving the first message frame sent by the proxy.

The sensing measurement result corresponds to the WLAN sensing measurement setup identification or the proxy measurement identification.

The first message frame may contain a plurality of sensing measurement results, and a WLAN sensing measurement setup identification or proxy measurement identification corresponding to each sensing measurement result.

That is, in the case that the first message frame includes the WLAN sensing measurement setup identification, the WLAN sensing measurement setup identification is used to indicate that the sensing measurement result included in the first message frame is the sensing measurement result corresponding to the WLAN sensing measurement setup identification.

In the case that the first message frame includes the proxy measurement identification, the proxy measurement identification is used to indicate that the sensing measurement result included in the first message frame is the sensing measurement result corresponding to the proxy measurement identification.

As an example, the initiator may receive the first message frame sent by the proxy, so as to obtain the sensing measurement result corresponding to the WLAN sensing measurement setup identification.

As an example, the initiator may receive the first message frame sent by the proxy, so as to obtain the sensing measurement result corresponding to the proxy measurement identification.

In an optional embodiment, the first message frame may be a measurement results report and/or a feedback frame, or may be other message frames including the sensing measurement result and its corresponding WLAN sensing measurement setup identification or proxy measurement identification, or may be other message frames including an identification bit that can indirectly determine the sensing measurement result and its corresponding WLAN sensing measurement setup identification or proxy measurement identification or related information, which is not limited here.

In an optional embodiment, the communication method provided by the embodiment of the present disclosure further includes:
receiving a second message frame sent by the proxy, where the second message frame is used to request to return the sensing measurement result.

As an example, after receiving the second message frame sent by the proxy for requesting to return the sensing measurement result, the initiator may determine that the proxy is about to return the sensing measurement result, and then may receive the first message frame sent by the proxy to obtain the sensing measurement result.

In an optional embodiment, the second message frame may be a poll frame, or other message frames that may directly request the return of the sensing measurement result, or may be other message frame that includes an identification bit for requesting feedback of the sensing measurement result or the related information, which is not limited here.

In an optional embodiment, the communication method provided by the embodiment of the present disclosure further includes:
sending a third message frame, where the third message frame is used to indicate that the sensing measurement result is determined to be received.

As an example, the initiator may send a third message frame to the proxy to indicate that the initiator determines to receive the sensing measurement result, that is, to indicate that the initiator can receive the sensing measurement result, so that the proxy sends the first message frame to the initiator after receiving the third message frame. Therefore, the initiator may continue to receive the first message frame sent by the proxy to obtain the sensing measurement result returned by the proxy.

As an example, the initiator may receive the second message frame sent by the proxy for requesting to return the sensing measurement result, and the initiator may further send a third message frame to the proxy to indicate that the initiator determines to receive the sensing measurement result, that is, to indicate that the initiator may receive the sensing measurement result, such that the proxy sends the first message frame to the initiator after receiving the third message frame. Therefore, the initiator can receive the first message frame sent by the proxy to obtain the sensing measurement result returned by the proxy.

As an example, the initiator may send a third message frame to the proxy to indicate that the initiator determines to receive the sensing measurement result, that is, to indicate that the initiator can receive the sensing measurement result, so that the proxy may send a second message frame for requesting return of the sensing measurement result to the initiator after receiving the third message frame. After receiving the second message frame sent by the proxy, the initiator may determine that the proxy is about to return the sensing measurement result, and then may continue to receive the first message frame sent by the proxy to obtain the sensing measurement result.

In an optional embodiment, the third message frame may be a clear to send to self (CTS-to-self) frame, or may be other message frames that can directly indicate that it is determined to receive the sensing measurement result, or may be other message frames that include an identification bit for indicating that it is determined to receive the sensing measurement result or related information, which is not limited here.

In an optional embodiment, the communication method provided by the embodiment of the present disclosure further includes:
sending a fourth message frame, where the fourth message frame is used to indicate to return the sensing measurement result.

As an example, the initiator may send a fourth message frame to the proxy to instruct the proxy to return the sensing measurement result. After receiving the fourth message frame, the proxy may send the first message frame to the initiator, so that the initiator may receive the first message frame to obtain the sensing measurement result.

As an example, the initiator may send a fourth message frame to the proxy to instruct the proxy to return the sensing measurement result. The proxy may send the second message frame to the initiator after receiving the fourth message frame, so that the initiator may determine that the proxy is about to return the sensing measurement result after receiving the second message frame. The initiator can then receive the first message frame sent by the proxy to obtain the sensing measurement result.

As an example, after receiving the second message frame sent by the proxy for requesting to return the sensing measurement result, the initiator may send a fourth message frame to the proxy to instruct the proxy to return the sensing measurement result. The initiator can then receive the first message frame sent by the proxy after receiving the fourth message frame to obtain the sensing measurement result.

As an example, the initiator may send a fourth message frame to the proxy to instruct the proxy to return the sensing measurement result, and further send a third message frame to the proxy to indicate that the initiator can receive the sensing measurement result so that the proxy begins to return the sensing measurement result. The initiator can then receive the first message frame sent by the proxy after receiving the third message frame to obtain the sensing measurement result.

As an example, the initiator may send a third message frame to the proxy to indicate that the initiator can receive the sensing measurement result, and further send a fourth message frame to the proxy to instruct the proxy to start to return the sensing measurement result. The initiator can then receive the first message frame sent by the proxy after receiving the fourth message frame to obtain the sensing measurement result.

As an example, the initiator may send a fourth message frame to the proxy to instruct the proxy to return the sensing measurement result. The initiator may receive a second message frame for requesting return of the sensing measurement result sent by the proxy after receiving the fourth message frame, and the initiator may then send a third message frame to the proxy to indicate that the initiator determines to receive the sensing measurement result, that is, indicate that the initiator can receive the sensing measurement result, so that the proxy sends the first message frame to the initiator after receiving the third message frame. Therefore, the initiator can receive the first message frame sent by the proxy to obtain the sensing measurement result returned by the proxy.

As an example, after receiving the second message frame sent by the proxy for requesting to return the sensing measurement result, the initiator may send a fourth message frame to the proxy to instruct the proxy to return the sensing measurement result, and further send a third message frame to the proxy to indicate that the initiator can receive the sensing measurement result and enable the proxy to start returning the sensing measurement result. The initiator can then receive the first message frame sent by the proxy after receiving the third message frame to obtain the sensing measurement result.

In an optional embodiment, the fourth message frame may be a measurement results request frame, or may be other message frames that may directly instruct the proxy to return the sensing measurement result, or may be other message frames that include an identification bit for instructing the proxy to return the sensing measurement result or related information, which is not limited here.

In an optional embodiment, the fourth message frame includes at least one of a WLAN sensing measurement setup identification and a proxy measurement identification.

As an example, the fourth message frame includes the WLAN sensing measurement setup identification, and is used to instruct the proxy to return the sensing measurement result corresponding to the WLAN sensing measurement setup identification.

As an example, the fourth message frame includes the proxy measurement identification, and is used to instruct the proxy to return the sensing measurement result corresponding to the proxy measurement identification.

In an optional embodiment, the second message frame includes at least one of a WLAN sensing measurement setup identification and a proxy measurement identification.

As an example, the second message frame includes the WLAN sensing measurement setup identification, and is used to request to return the sensing measurement result corresponding to the WLAN sensing measurement setup identification.

As an example, the second message frame includes the proxy measurement identification, and is used for requesting to return the sensing measurement result corresponding to the proxy measurement identification.

In an optional embodiment, the third message frame includes at least one of a WLAN sensing measurement setup identification and a proxy measurement identification.

As an example, the third message frame includes a WLAN sensing measurement setup identification, and is used to indicate to determine to receive the sensing measurement result corresponding to the WLAN sensing measurement setup identification.

As an example, the third message frame includes the proxy measurement identification, and is used to indicate to determine to receive the sensing measurement result corresponding to the proxy measurement setup identification.

In an optional embodiment, the WLAN sensing measurement setup identification is allocated to the initiator by the proxy in a sensing by proxy response message frame sent to the initiator.

That is, after the initiator receives the sensing by proxy response message frame sent by the proxy, it determines the WLAN sensing measurement setup identification based on the sensing by proxy response message frame.

In an optional embodiment, the proxy measurement identification is allocated to the proxy by the initiator in the sensing by proxy request message frame sent to the proxy, so that the proxy identifies the sensing measurement result by the proxy measurement identification.

In an optional embodiment, when receiving the first message frame, the initiator receives the first message frame within a first sending opportunity.

In an optional embodiment, when receiving the second message frame, the initiator receives the second message frame within the first sending opportunity.

In an optional embodiment, when sending the third message frame, the initiator sends the third message frame within the first sending opportunity.

In an optional embodiment, when sending the fourth message frame, the initiator sends the fourth message frame within the first sending opportunity.

In an optional embodiment, the first sending opportunity is determined based on at least one of the following:
a sending opportunity indicated by a timeout subfield included in the sensing by proxy request message frame sent to the proxy;
a sending opportunity indicated by a timeout subfield included in the sensing by proxy response message frame sent by the proxy;
a sending opportunity indicated by a timeout subfield included in a fifth message frame sent by the proxy, where the fifth message frame is used to indicate that a WLAN sensing measurement and/or a WLAN sensing session has been established with a WLAN sensing responder;
time information for indicating to return the sensing measurement result and included in the sensing by proxy response message frame sent by the proxy.

The first sending opportunity is used to indicate that the proxy needs to feed back the sensing measurement result at the sending opportunity indicated by timeout or within a sending opportunity corresponding to the time information, and is also used to indicate that the initiator needs to receive the measurement results report and/or the feedback frame at the sending opportunity indicated by timeout or the sending opportunity corresponding to the time information.

As an example, the sensing by proxy request message frame sent by the initiator to the proxy includes a timeout subfield that may directly or indirectly indicate a sending opportunity, and the initiator receives the first message frame sent by the proxy within the sending opportunity.

As an example, after the initiator receives the sensing by proxy response message frame sent by the proxy, it can determine the sending opportunity directly or indirectly indicated by the timeout subfield included in the sensing by proxy response message frame, and then receive the first message frame sent by the proxy within the sending opportunity.

As an example, after the proxy sends a sensing by proxy response message frame to the initiator to indicate acceptance of the sensing by proxy measurement request of the initiator, it may establish a WLAN sensing measurement and a WLAN sensing session with the WLAN sensing responder. After establishing the WLAN sensing measurement and/or WLAN sensing session, the fifth message frame is sent to the initiator to indicate that the corresponding WLAN sensing measurement and/or WLAN sensing session has been established with the WLAN sensing responder.

After the initiator receives the fifth message frame sent by the proxy, it may determine that the timeout subfield included in the fifth message frame directly or indirectly indicates the sending opportunity, and then receive the first message frame sent by the proxy within the sending opportunity.

As an example, the sensing by proxy response message frame sent by the proxy to the initiator also includes time information for indicating the return of the measurement result. After receiving the sensing by proxy response message frame, the initiator may determine the first sending opportunity based on the time information, and then receive the first message frame sent by the proxy within the sending opportunity.

As an example, the first sending opportunity may be any one of the sending opportunities among the sending opportunity indicated by the timeout subfield included in the sensing by proxy request message frame, the sending opportunity indicated by the timeout subfield included in the sensing by proxy response message frame, the sending opportunity indicated by the timeout subfield included in the fifth message frame, and the sending opportunity determined based on the time information included in the sensing by proxy response message frame for indicating the return of the sensing measurement result, may also be the sending opportunity with the longest duration among them, or may be the sending opportunity with the shortest duration among them, or may be an average value of the sending opportunities, which is not limited here.

As shown in FIG. 2, an embodiment of the present disclosure provides a communication method. Optionally, the method may be applied to a WLAN sensing proxy. The communication method shown in FIG. 1 may specifically include the following steps.

In step 201, a first message frame is sent to the WLAN sensing initiator, where the first message frame includes a sensing measurement result, and the first message frame also includes at least one of a WLAN sensing measurement setup identification and a proxy measurement identification corresponding to the sensing measurement result.

The WLAN sensing measurement setup identification is assigned to the initiator by the proxy during the sensing proxy setup procedure, for example, the AP carries the measurement setup ID or SBP ID in the SBP response frame sent to the requesting STA during the sensing proxy setup procedure.

Specifically, the proxy may return the sensing measurement result to the initiator by sending a first message frame to the initiator.

The sensing measurement result corresponds to the WLAN sensing measurement setup identification or the proxy measurement identification.

The first message frame may contain a plurality of sensing measurement results, and a WLAN sensing measurement setup identification or proxy measurement identification corresponding to each sensing measurement result.

That is, in the case that the first message frame includes the WLAN sensing measurement setup identification, the WLAN sensing measurement setup identification is used to indicate that the sensing measurement result included in the first message frame is the sensing measurement result corresponding to the WLAN sensing measurement setup identification.

In the case that the first message frame includes the proxy measurement identification, the proxy measurement identification is used to indicate that the sensing measurement result included in the first message frame is the sensing measurement result corresponding to the proxy measurement identification.

As an example, the proxy may send a first message frame to the initiator, so as to acquire a sensing measurement result corresponding to the WLAN sensing measurement setup identification.

As an example, the proxy may send a first message frame to the initiator, so as to obtain a sensing measurement result corresponding to the proxy measurement identification.

In an optional embodiment, the first message frame may be a measurement results report and/or feedback frame, or may be other message frames including the sensing measurement result and its corresponding WLAN sensing measurement setup identification or proxy measurement identification, may also be other message frames including an identification bit that can indirectly determine the sensing measurement result and its corresponding WLAN sensing measurement setup identification or proxy measurement identification or related information, which is not limited here.

In an optional embodiment, the communication method provided by the embodiment of the present disclosure further includes:
sending a second message frame, where the second message frame is used to request to return the sensing measurement result.

As an example, the proxy may send to the proxy a second message frame for requesting to return the sensing measurement result, so as to inform the initiator that the proxy is about to return the sensing measurement result, and then may send the first message frame to the initiator to return the sensing measurement result.

In an optional embodiment, the second message frame may be a poll frame, or other message frames that may directly request the return of the sensing measurement result, or may be other message frames that include an identification bit for requesting feedback of the sensing measurement result or the related information, which is not limited here.

In an optional embodiment, the communication method provided by the embodiment of the present disclosure further includes:
receiving a third message frame sent by the initiator, where the third message frame is used to indicate that the sensing measurement result is determined to be received.

As an example, the proxy may receive the third message frame sent by the initiator to determine that the initiator can receive the sensing measurement result, and then send the first message frame to the initiator after receiving the third message frame to return the sensing measurement result to the initiator through the first message frame.

As an example, the proxy may send to the initiator a second message frame for requesting return of the sensing measurement result, and receive a third message frame sent by the initiator to determine that the initiator can receive the sensing measurement result, and then after receiving the third message frame, send a first message frame to the initiator to return the sensing measurement result.

As an example, the proxy may receive the third message frame sent by the initiator to determine that the initiator can receive the sensing measurement result, and then send to the initiator the second message frame for requesting to return the sensing measurement result after receiving the third message frame, to indicate that the sensing measurement result is about to be returned, so that it may continue to send the first message frame to the initiator to return the sensing measurement result.

In an optional embodiment, the third message frame may be a CTS-to-self frame, or may be other message frames that can directly indicate that it is determined to receive the sensing measurement result, or may be other message frames that include an identification bit for indicating that it is determined to receive the sensing measurement result or related information, which is not limited here.

In an optional embodiment, the communication method provided by the embodiment of the present disclosure further includes:
receiving a fourth message frame sent by the initiator, where the fourth message frame is used to indicate to return a sensing measurement result.

As an example, the proxy may receive the fourth message frame sent by the initiator for instructing the proxy to return the sensing measurement result, and then send the first message frame to the initiator after receiving the fourth message frame to return the sensing measurement result.

As an example, the proxy may receive the fourth message frame sent by the initiator to indicate to return the sensing measurement result, and send the second message frame to the initiator, so that the initiator may determine that the proxy is about to return the sensing measurement result after receiving the second message frame. The proxy in turn may send a first message frame to the proxy to return the sensing measurement result.

As an example, the proxy may send to the initiator a second message frame for requesting to return the sensing measurement result, and receive a fourth message frame sent by the initiator for instructing to return the sensing measurement result. After receiving the fourth message frame, the proxy may send the first message frame to the initiator to return the sensing measurement result.

As an example, after receiving the fourth message frame sent by the initiator for indicating to return the sensing measurement result, and further receiving the third message frame for indicating that the initiator can receive the sensing measurement result, the proxy may send to the initiator a first message frame to return the sensing measurement result.

As an example, after receiving the third message frame indicating that the initiator can receive the sensing measurement result, and further receiving the fourth message frame indicating to return the sensing measurement result, the proxy may send the first message frame to the initiator to return the sensing measurement result.

As an example, after receiving the fourth message frame for indicating to return the sensing measurement result, the proxy may send the second message frame for requesting to return the sensing measurement result to the initiator. After further receiving the third message frame for indicating that the initiator determines to receive the sensing measurement result, that is, indicating that the initiator can receive the sensing measurement result, the proxy sends the first message frame to the initiator to return the sensing measurement result.

As an example, the proxy may send to the initiator a second message frame for requesting return of the sensing measurement result, so that the initiator sends a fourth message frame for indicating return of the sensing measurement result, and further sends a third message frame to indicate that the initiator can receive sensing measurement result. After finally receiving the third message frame, the proxy may send the first message frame to the initiator to return the sensing measurement result.

In an optional embodiment, the fourth message frame may be a measurement results request frame, or may be other message frames that may directly instruct the proxy to return the sensing measurement result, or may be other message frames that include the identification bit for instructing the proxy to return the sensing measurement result or related information, which is not limited here.

In an optional embodiment, the fourth message frame includes at least one of a WLAN sensing measurement setup identification and a proxy measurement identification.

As an example, the fourth message frame includes the WLAN sensing measurement setup identification, and is used to instruct the proxy to return the sensing measurement result corresponding to the WLAN sensing measurement setup identification.

As an example, the fourth message frame includes the proxy measurement identification, and is used to instruct the proxy to return the sensing measurement result corresponding to the proxy measurement identification.

In an optional embodiment, the second message frame includes at least one of a WLAN sensing measurement setup identification and a proxy measurement identification.

As an example, the second message frame includes a WLAN sensing measurement setup identification, and is used for requesting to return a sensing measurement result corresponding to the WLAN sensing measurement setup identification.

As an example, the second message frame includes the proxy measurement identification, and is used for requesting to return the sensing measurement result corresponding to the proxy measurement identification.

In an optional embodiment, the third message frame includes at least one of a WLAN sensing measurement setup identification and a proxy measurement identification.

As an example, the third message frame includes a WLAN sensing measurement setup identification, and is used to indicate that it is determined to receive the sensing measurement result corresponding to the WLAN sensing measurement setup identification.

As an example, the third message frame includes the proxy measurement identification, and is used to indicate that it is determined to receive the sensing measurement result corresponding to the proxy measurement setup identification.

In an optional embodiment, the WLAN sensing measurement setup identification is allocated to the initiator by the proxy in a sensing by proxy response message frame sent to the initiator.

That is, after the initiator receives the sensing by proxy response message frame sent by the proxy, it determines the WLAN sensing measurement setup identification based on the sensing by proxy response message frame.

In an optional embodiment, the proxy measurement identification is allocated to the proxy by the initiator in the sensing by proxy request message frame sent to the proxy, so that the proxy identifies the sensing measurement result by the proxy measurement identification.

In an optional embodiment, when sending the first message frame, the proxy sends the first message frame within the first sending opportunity.

In an optional embodiment, when sending the second message frame, the proxy sends the second message frame within the first sending opportunity.

In an optional embodiment, when receiving the third message frame, the proxy receives the third message frame within the first sending opportunity.

In an optional embodiment, when receiving the fourth message frame, the proxy receives the fourth message frame within the first sending opportunity.

In an optional embodiment, the first sending opportunity is determined based on at least one of the following:
a sending opportunity indicated by a timeout subfield included in the sensing by proxy request message frame sent by the initiator;
a sending opportunity indicated by a timeout subfield included in the sensing by proxy response message frame sent to the initiator;
a sending opportunity indicated by a timeout subfield included in the fifth message frame sent to the initiator, where the fifth message frame is used to indicate that a WLAN sensing measurement and/or WLAN sensing session has been established with the WLAN sensing responder;
time information for indicating return of the sensing measurement result included in the sensing by proxy response message frame sent to the initiator.

The first sending opportunity is used to indicate that the proxy needs to feed back the sensing measurement result at the sending opportunity indicated by timeout or within the sending opportunity corresponding to the time information, and is also used to indicate that the initiator needs to receive the measurement results report and/or feedback frame at the sending opportunity indicated by timeout or the sending opportunity corresponding to the time information.

As an example, the sensing by proxy request message frame received by the proxy includes the timeout subfield, which may directly or indirectly indicate a sending opportunity, and the proxy sends the first message frame to the initiator within the sending opportunity.

As an example, the sensing by proxy response message frame sent by the proxy includes the timeout subfield, which may directly or indirectly indicate a sending opportunity, and the proxy sends the first message frame to the initiator within the sending opportunity.

As an example, after the proxy sends a sensing by proxy response message frame to the initiator to indicate acceptance of the sensing by proxy measurement request of the initiator, it may establish a WLAN sensing measurement and a WLAN sensing session with the WLAN sensing responder. And after establishing the WLAN sensing measurement and/or WLAN sensing session, the fifth message frame is sent to the initiator to indicate that the corresponding WLAN sensing measurement and/or WLAN sensing session has been established with the WLAN sensing responder.

After sending the fifth message frame, the proxy may determine the sending opportunity directly or indirectly indicated by the timeout subfield included in the fifth message frame, and then send the first message frame to the initiator within the sending opportunity.

As an example, the sensing by proxy response message frame sent by the proxy to the initiator also includes time information for indicating the return of the measurement result, and the proxy can determine the first sending opportunity based on the time information after sending the sensing by proxy response message frame, and send the first message frame to the initiator within the sending opportunity.

As an example, the first sending opportunity may be any one of the sending opportunities among the sending opportunity indicated by the timeout subfield included in the sensing by proxy request message frame, the sending opportunity indicated by the timeout subfield included in the sensing by proxy response message frame, the sending opportunity indicated by the timeout subfield included in the fifth message frame, and the sending opportunity determined based on the time information included in the sensing by proxy response message frame for indicating the return of the sensing measurement result, or may be the sending opportunity with the longest duration among them, or may be the sending opportunity with the shortest duration among them, or may be an average value of the sending opportunities, which is not limited here.

The communication method provided by the embodiments of the present disclosure will be further described below in combination with specific examples:

### First example:

The initiator (requesting STA) sends a measurement results request frame to the proxy (proxy AP) to instruct the proxy to reply a measurement results frame after receiving the measurement result request frame so as to return the sensing measurement result.

The measurement results request frame includes a WLAN sensing measurement setup identification or a proxy measurement identification, and the proxy may return the sensing measurement result corresponding to the WLAN sensing measurement setup identification or the proxy measurement identification.

### Second example:

The proxy sends a poll frame to the initiator to request the return of the sensing measurement result.

The proxy may receive the CTS-to-self frame sent by the initiator to determine that the initiator can receive the sensing measurement result, and then reply the measurement results frame to the initiator to return the sensing measurement result.

And the measurement results frame includes a WLAN sensing measurement setup identification or a proxy measurement identification, so as to identify the returned sensing measurement result.

The initiator can prevent other devices from sending data to it within a specified time by sending a CTS to self frame, that is, it needs to occupy the channel for a period of time to receive the sensing measurement result returned by the proxy, so as to avoid data conflicts.

### Third example:

The sending and receiving procedures of each message frame in the first example and the second example can be performed within a first sending opportunity, and the first sending opportunity is determined based on at least one of the following:
a sending opportunity indicated by a timeout subfield included in a sensing by proxy request message frame sent by the initiator;
a sending opportunity indicated by a timeout subfield included in a sensing by proxy response message frame sent by the proxy;
a sending opportunity indicated by a timeout subfield included in a fifth message frame sent by the proxy, where the fifth message frame is used to indicate that a WLAN sensing measurement and/or wireless LAN sensing session has been established with the WLAN sensing responder;
time information for indicating the return of the sensing measurement result included in the sensing by proxy response message frame sent by the proxy.

Based on the communication method provided by the embodiments of the present disclosure, the proxy can directly send the first message frame to the initiator to return the sensing measurement result, or can return the sensing measurement result after receiving the fourth message frame sent by the initiator for indicating the return of the sensing measurement result. Alternatively, the proxy can also send a second message frame to the initiator to request return of the sensing measurement result, and upon receiving the third message frame to determine that the initiator can receive the sensing measurement result, send the first message frame to the initiator to return the sensing measurement result. At the same time, the initiator can complete the feedback of the measurement result within the first sending opportunity, so as to improve the efficiency and timeliness of returning the sensing measurement result, and have high applicability.

As shown in FIG. 3, an embodiment of the present disclosure provides a communication apparatus, including:
a first receiving unit 301, configured to receive a first message frame sent by a WLAN sensing proxy, where the first message frame includes a sensing measurement result, and the first message frame further includes at least one of a WLAN sensing measurement setup identification and a proxy measurement identification.

Optionally, in the embodiment of the present disclosure, the above-mentioned first receiving unit 301 is further configured to:
receive a second message frame sent by the WLAN sensing proxy, where the second message frame is used to request to return the sensing measurement result.

Optionally, in the embodiment of the present disclosure, the above apparatus further includes a first sending unit, which is configured to:
send a third message frame, where the third message frame is used to indicate that the sensing measurement result is determined to be received.

Optionally, in the embodiment of the present disclosure, the above-mentioned first sending unit is configured to:
send a fourth message frame, where the fourth message frame is used to indicate to return the above-mentioned sensing measurement result.

Optionally, in the embodiment of the present disclosure, the fourth message frame includes at least one of the WLAN sensing measurement setup identification and the proxy measurement identification.

Optionally, in the embodiment of the present disclosure, the above-mentioned first receiving unit 301 is configured to:
receive the first message frame sent by the WLAN sensing proxy within a first sending opportunity.

Optionally, in the embodiment of the present disclosure, the above-mentioned first receiving unit 301 is configured to:
receive the second message frame sent by the WLAN sensing proxy within the first sending opportunity.

Optionally, in the embodiment of the present disclosure, the above-mentioned first sending unit is configured to:
send the third message frame within the first sending opportunity.

Optionally, in the embodiment of the present disclosure, the above-mentioned first sending unit is configured to:
send the fourth message frame within the first sending opportunity.

Optionally, in the embodiment of the present disclosure, the foregoing first sending opportunity is determined based on at least one of the following:
a sending opportunity indicated by a timeout subfield included in a sensing by proxy request message frame sent to the WLAN sensing proxy;
a sending opportunity indicated by a timeout subfield included in a sensing by proxy response message frame sent by the WLAN sensing proxy;
a sending opportunity indicated by a timeout subfield included in a fifth message frame sent by the WLAN sensing proxy, where the fifth message frame is used to indicate that a WLAN sensing measurement and/or a WLAN sensing session has been established with a WLAN sensing responder;
time information for indicating to return the sensing measurement result included in the sensing by proxy response message frame sent by the WLAN sensing proxy.

Optionally, in the embodiment of the present disclosure, the above fourth message frame is a measurement results request frame.

Optionally, in the embodiment of the present disclosure, the above second message frame is a poll frame.

Optionally, in the embodiment of the present disclosure, the above third message frame is a CTS-to-self frame.

Optionally, in the embodiment of the present disclosure, the foregoing first message frame is a measurement results report and/or a feedback frame.

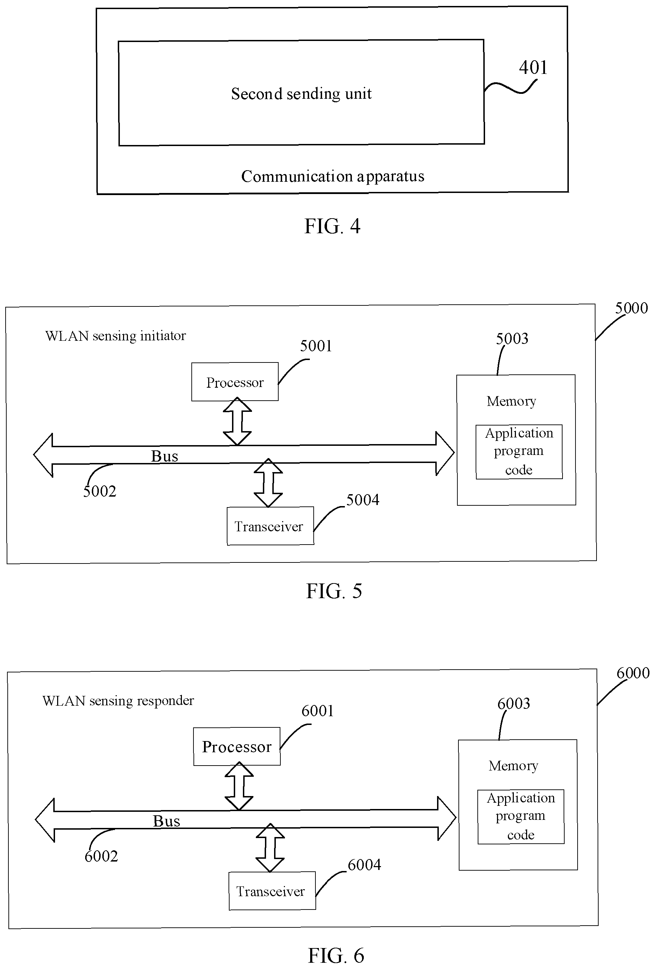

As shown in FIG. 4, an embodiment of the present disclosure provides a communication apparatus, including:
a second sending unit 401, configured to send a first message frame to the WLAN sensing initiator, where the first message frame includes the sensing measurement result, and the first message frame further includes at least one of the WLAN sensing measurement setup identification and the proxy measurement identification.

Optionally, in the embodiment of the present disclosure, the above-mentioned second sending unit 401 is further configured to:
send a second message frame, where the second message frame is used to request to return the sensing measurement result.

Optionally, in the embodiment of the present disclosure, the above apparatus further includes a second receiving unit, which is configured to:
receive a third message frame sent by the WLAN sensing initiator, where the third message frame is used to indicate to determine to receive the sensing measurement result.

Optionally, in the embodiment of the present disclosure, the above-mentioned second receiving unit is further configured to:
receive a fourth message frame sent by the WLAN sensing initiator, where the fourth message frame is used to indicate to return the sensing measurement result.

Optionally, in the embodiment of the present disclosure, the fourth message frame includes at least one of the WLAN sensing measurement setup identification and the proxy measurement identification.

Optionally, in the embodiment of the present disclosure, the above-mentioned second sending unit 401 is configured to:
send the first message frame to the WLAN sensing initiator within a first sending opportunity.

Optionally, in the embodiment of the present disclosure, the above-mentioned second sending unit 401 is configured to:
send the second message frame within the first sending opportunity.

Optionally, in the embodiment of the present disclosure, the above-mentioned second receiving unit is configured to:
receive the third message frame sent by the WLAN sensing initiator within the first sending opportunity.

Optionally, in the embodiment of the present disclosure, the above-mentioned second receiving unit is configured to:
receive the fourth message frame sent by the WLAN sensing initiator within the first sending opportunity.

Optionally, in the embodiment of the present disclosure, the foregoing first sending opportunity is determined based on at least one of the following:
a sending opportunity indicated by a timeout subfield included in a sensing by proxy request message frame sent by the WLAN sensing initiator;
a sending opportunity indicated by a timeout subfield included in a sensing by proxy response message frame sent to the WLAN sensing initiator;
a sending opportunity indicated by a timeout subfield included in a fifth message frame sent to the WLAN sensing initiator, where the fifth message frame is used to indicate that the WLAN sensing measurement and/or WLAN sensing session has been established with the wireless local area network sensing responder;
time information for indicating to return the sensing measurement result included in the sensing by proxy response message frame sent to the WLAN sensing initiator.

An embodiment of the present disclosure also provides a WLAN sensing initiator, as shown in FIG. 5, the WLAN initiator 5000 shown in FIG. 5 may be a server, and includes: a processor 5001 and a memory 5003. The processor 5001 is connected to the memory 5003, for example, through a bus 5002. Optionally, the WLAN sensing initiator 5000 may further include a transceiver 5004. It should be noted that, in practical applications, the transceiver 5004 is not limited to one, and the structure of the WLAN initiator 5000 does not limit the embodiments of the present disclosure.

The memory 5003 is used to store the application program codes for executing the embodiments of the present disclosure, and the execution is controlled by the processor 5001. The processor 5001 is configured to execute the application program code stored in the memory 5003, so as to implement the communication method applicable to the WLAN sensing initiator in this solution.

An embodiment of the present disclosure also provides a WLAN sensing proxy, as shown in FIG. 6, the WLAN responder 6000 shown in FIG. 6 may be a server, and includes: a processor 6001 and a memory 6003. The processor 6001 is connected to the memory 6003, for example, through a bus 6002. Optionally, the WLAN sensing responder 6000 may also include a transceiver 6004. It should be noted that, in practical applications, the transceiver 6004 is not limited to one, and the structure of the WLAN responder 6000 does not limit the embodiments of the present disclosure.

The memory 6003 is used to store application program codes for executing the embodiments of the present disclosure, and the execution is controlled by the processor 6001. The processor 6001 is configured to execute the application program codes stored in the memory 6003, so as to implement the communication method in FIG. 2 applicable to the WLAN sensing proxy.

The processor 5001 and the processor 6001 may be a Central Processing Unit (CPU), a general-purpose processor, a Digital Signal Processor (DSP), an Application Specific Integrated Circuit (ASIC), a Field Programmable Gate Array (FPGA) or other programmable logic devices, transistor logic devices, hardware components or any combination thereof. It may implement or execute the various illustrative logical blocks, modules and circuits described in the contents of the present disclosure. The processor 5001 and the processor 6001 may also be a combination to realize computing functions, for example, a combination of one or more microprocessors, a combination of a DSP and a microprocessor, and the like.

The bus 5002 and the bus 6002 may include a path for transferring information between the components described above. The bus 5002 and the bus 6002 may be a Peripheral Component Interconnect (PCI) bus or an Extended Industry Standard Architecture (EISA) bus, etc. The bus 5002 and the bus 6002 may be divided into an address bus, a data bus, a control bus, and the like. For ease of representation, only one thick line is used in FIG. 5 and FIG. 6, but it does not mean that there is only one bus or one type of bus.

The memory 5003 and the memory 6003 may be a Read Only Memory (ROM) or other types of static storage devices that can store static information and instructions, a Random Access Memory (RAM) or other types of dynamic storage devices that can store information and instructions, or may be an Electrically Erasable Programmable Read Only Memory (EEPROM), a Compact Disc Read Only Memory (CD-ROM) or other optical disc storage, CD storage (including compact discs, laser discs, optical discs, digital versatile discs, Blu-ray discs, etc.), magnetic disk storage media or other magnetic storage devices, or may be any other medium that are used to carry or store desired program code in the form of instructions or data structures and can be accessed by a computer, which is not limited thereto.

Embodiments of the present disclosure provide a computer-readable storage medium, on which a computer program is stored, and when the computer program is run on a computer, the computer can execute the corresponding content in the foregoing method embodiments.

It should be understood that although the various steps in the flowchart of the accompanying drawings are displayed sequentially according to the arrows, these steps are not necessarily executed sequentially in the order indicated by the arrows. Unless otherwise specified herein, there is no strict order restriction on the execution of these steps, and these steps can be executed in other orders. Moreover, at least some of the steps in the flowcharts of the accompanying drawings may include multiple sub-steps or multiple stages, and these sub-steps or stages may not necessarily be executed at the same moment, but may be executed at different moments, and the order of execution is also not necessarily performed sequentially, but may be performed in turn or alternately with at least a part of other steps or sub-steps or stages of other steps.

It should be noted that, the computer-readable storage medium mentioned above in the present disclosure may be a computer-readable signal medium or a computer-readable storage medium, or any combination of the above two. The computer-readable storage medium may be, for example, but not limited to, an electrical, magnetic, optical, electromagnetic, infrared, or semiconductor system, apparatus, or device, or any combination thereof. More specific examples of the computer-readable storage media may include, but are not limited to, electrical connections with one or more wires, portable computer diskettes, hard disks, random access memory (RAM), read-only memory (ROM), erasable Programmable read-only memory (EPROM or flash memory), optical fiber, portable compact disk read-only memory (CD-ROM), optical storage device, magnetic storage device, or any suitable combination of the above. In the present disclosure, the computer-readable storage medium may be any tangible medium that contains or stores a program that can be used by or in conjunction with an instruction execution system, apparatus, or device. In the present disclosure, however, the computer-readable signal medium may include a data signal propagated in baseband or as part of a carrier wave carrying computer-readable program code therein. Such propagated data signals may take many forms, including but not limited to electromagnetic signals, optical signals, or any suitable combination of the foregoing. The computer-readable signal medium may also be any computer-readable storage medium other than the computer-readable storage medium, and the computer-readable signal medium can send, propagate, or transmit the program used by or in connection with an instruction execution system, apparatus, or device. The program code contained on the computer-readable storage medium may be transmitted by any appropriate medium, including but not limited to: wires, optical cables, radio frequency (RF), etc., or any suitable combination of the above.

The above-mentioned computer-readable storage medium may be contained in the above-mentioned WLAN initiator or responder; or may exist independently without being assembled into the WLAN initiator or responder.

The above computer-readable storage medium carries one or more programs, and when the one or more programs are executed by the WLAN initiator or responder, the initiator or responder executes the corresponding communication method.

According to an aspect of the present disclosure, there is provided a computer program product or computer program including computer instructions stored in a computer-readable storage medium. The processor of the computer device reads the computer instruction from the computer-readable storage medium, and the processor executes the computer instruction, so that the computer device executes the communication method provided in the various optional implementation manners above.

The computer program code for carrying out the operations of the present disclosure can be written in one or more programming languages, or combinations thereof, and the above programming languages include object-oriented programming languages - such as Java, Smalltalk, C++, and also include conventional procedural programming languages - such as "C" language or a similar programming language. The program code may execute entirely on the user's computer, partly on the user's computer, execute as a stand-alone software package, partly execute on the user's computer and partly execute on a remote computer or entirely on the remote computer or server. In cases involving a remote computer, the remote computer can be connected to the user computer through any kind of network, including a local area network (LAN) or a wide area network (WAN), or it may be connected to an external computer (for example, connected through Internet by utilizing an Internet service provider).

The flowcharts and block diagrams in the drawings illustrate the architecture, functionality, and operation of possible implementations of systems, methods and computer program products according to various embodiments of the present disclosure. In this regard, each block in the flowchart or block diagram may represent one module, a part of a program segment or code that contains one or more executable instructions for implementing specified logical functions. It should also be noted that, in some alternative implementations, the functions noted in the blocks may occur out of the order noted in the drawings. For example, two blocks shown in succession may, in fact, be executed substantially concurrently, or they may sometimes be executed in the reverse order, depending upon the functionality involved. It should also be noted that each block of the block diagrams and/or flowcharts, and combinations of blocks in the block diagrams and/or flowcharts, can be implemented by a dedicated hardware-based system that performs the specified functions or operations, or may be implemented by a combination of dedicated hardware and computer instructions.

The modules involved in the embodiments described in the present disclosure may be implemented by software or by hardware. The name of the module does not constitute a limitation of the module itself under certain circumstances, for example, A module may also be described as " A module for performing B operation".

The above description is only the preferred embodiments of the present disclosure and an illustration of the applied technical principles. Those skilled in the art should understand that the disclosed scope involved in the present disclosure is not limited to the technical solutions formed by the specific combination of the above-mentioned technical features, but also covers other technical solutions formed by any combination of the above-mentioned technical features or equivalent features in the case of not departing from the above disclosed concept, for example, the technical solution formed by replacing the above-mentioned feature with the technical feature with similar function disclosed in (but not limited to) the present disclosure.

## Claims

1. A communication method, applied to a Wireless Local Area Network (WLAN) sensing initiator, wherein the method comprises:
receiving a first message frame sent by a WLAN sensing proxy, wherein the first message frame comprises a sensing measurement result, and the first message frame further comprises at least one of a WLAN sensing measurement setup identification and a proxy measurement identification corresponding to the sensing measurement result.

2. The method according to claim 1, further comprising:
receiving a second message frame sent by the WLAN sensing proxy, wherein the second message frame is used to request to return the sensing measurement result.

3. The method according to claim 1, further comprising:
sending a third message frame, wherein the third message frame is used to indicate that the sensing measurement result is determined to be received.

4. The method according to claim 1, further comprising:
sending a fourth message frame, wherein the fourth message frame is used to indicate to return the sensing measurement result.

5. The method according to claim 4, wherein the fourth message frame comprises at least one of the WLAN sensing measurement setup identification and the proxy measurement identification.

6. The method according to claim 1, wherein receiving the first message frame sent by the WLAN sensing proxy comprises:
receiving the first message frame sent by the WLAN sensing proxy within a first sending opportunity.

7. The method according to claim 2, wherein receiving the second message frame sent by the WLAN sensing proxy comprises:
receiving the second message frame sent by the WLAN sensing proxy within a first sending opportunity.

8. The method according to claim 3, wherein sending the third message frame comprises:
sending the third message frame within a first sending opportunity.

9. The method according to claim 4, wherein sending the fourth message frame comprises:
sending the fourth message frame within a first sending opportunity.

10. The method according to claim 6, wherein the first sending opportunity is determined based on at least one of:
a sending opportunity indicated by a timeout subfield comprised in a sensing by proxy request message frame sent to the WLAN sensing proxy;
a sending opportunity indicated by a timeout subfield comprised in a sensing by proxy response message frame sent by the WLAN sensing proxy;
a sending opportunity indicated by a timeout subfield comprised in a fifth message frame sent by the WLAN sensing proxy, wherein the fifth message frame is used to indicate that a WLAN sensing measurement and/or a WLAN sensing session has been established with a WLAN sensing responder;
time information for indicating to return the sensing measurement result and comprised in the sensing by proxy response message frame sent by the WLAN sensing proxy.

11. The method according to claim 4, wherein the fourth message frame is a measurement results request frame.

12. The method according to claim 2, wherein the second message frame is a poll frame.

13. The method according to claim 3, wherein the third message frame is a CTS-to-self frame.

14. The method according to claim 1, wherein the first message frame is a measurement results report and/or a feedback frame.

15. A communication method, applied to a Wireless Local Area Network (WLAN) sensing proxy, wherein the method comprises:
sending a first message frame to a WLAN sensing initiator, wherein the first message frame comprises a sensing measurement result, and the first message frame further comprises at least one of a WLAN sensing measurement setup identification and a proxy measurement identification corresponding to the sensing measurement result.

16. The method according to claim 15, further comprising:
sending a second message frame, wherein the second message frame is used to request to return the sensing measurement result.

17. The method according to claim 15, further comprising:
receiving a third message frame sent by the WLAN sensing initiator, wherein the third message frame is used to indicate that the sensing measurement result is determined to be received.

18. The method according to claim 15, further comprising:
receiving a fourth message frame sent by the WLAN sensing initiator, wherein the fourth message frame is used to indicate to return the sensing measurement result.

19. The method according to claim 18, wherein the fourth message frame comprises at least one of the WLAN sensing measurement setup identification and the proxy measurement identification.

20. The method according to claim 15, wherein sending the first message frame to the WLAN sensing initiator comprises:
sending the first message frame to the WLAN sensing initiator within a first sending opportunity.

21. The method according to claim 16, wherein sending the second message frame comprises:
sending the second message frame within a first sending opportunity.

22. The method according to claim 17, wherein receiving the third message frame sent by the WLAN sensing initiator comprises:
receiving the third message frame sent by the WLAN sensing initiator within a first sending opportunity.

23. The method according to claim 18, wherein receiving the fourth message frame sent by the WLAN sensing initiator comprises:
receiving the fourth message frame sent by the WLAN sensing initiator within a first sending opportunity.

24. The method according to claim 20, wherein the first sending opportunity is determined based on at least one of:
a sending opportunity indicated by a timeout subfield comprised in a sensing by proxy request message frame sent by the WLAN sensing initiator;
a sending opportunity indicated by a timeout subfield comprised in a sensing by proxy response message frame sent to the WLAN sensing initiator;
a sending opportunity indicated by a timeout subfield comprised in a fifth message frame sent to the WLAN sensing initiator, wherein the fifth message frame is used to indicate that a WLAN sensing measurement and/or a WLAN sensing session has been established with a WLAN sensing responder;
time information for indicating to return the sensing measurement result and comprised in the sensing by proxy response message frame sent to the WLAN sensing initiator.

25. A communication apparatus, comprising:
a first receiving unit, configured to receive a first message frame sent by a Wireless Local Area Network (WLAN) sensing proxy, wherein the first message frame comprises a sensing measurement result, and the first message frame further comprises at least one of a WLAN sensing measurement setup identification and a proxy measurement identification.

26. A communication apparatus, comprising:
a second sending unit, configured to send a first message frame to a Wireless Local Area Network (WLAN) sensing initiator, wherein the first message frame comprises a sensing measurement result, and the first message frame further comprises at least one of a WLAN sensing measurement setup identification and a proxy measurement identification.

27. A Wireless Local Area Network (WLAN) sensing initiator, wherein the WLAN sensing initiator comprises a memory, a processor, and a computer program stored in the memory and operable on the processor, and the processor, when executing the program, implements the method according to any one of claims 1 to 14.

28. A Wireless Local Area Network (WLAN) sensing proxy, wherein the WLAN sensing proxy comprises a memory, a processor, and a computer program stored on the memory and operable on the processor, and the processor, when executing the program, implements the method according to any one of claims 15 to 24.

29. A computer-readable storage medium, wherein a computer program is stored on the computer-readable storage medium, and when the computer program is executed by a processor, the method according to any one of claims 1 to 24 is implemented.
